# EUROPEAN PATENT APPLICATION

(11) **EP 0 902 077 A1**
(43) Date of publication of application: **17.03.1999**
(21) Application number: 98307066.5
(22) Date of filing: 03.09.1998
(51) Int. Cl.: C09K 17/12, C09K 17/06, C04B 28/26, E02D 37/00

(54) **The stabilisation of soluble sulphates in substratum materials**

(30) Priority: 03.09.1997 GB 9718713
(71) Applicant: Bagrat (UK) Limited, Sleaford, Lincs. NG34 7JP (GB)
(72) Inventor: Hillcoat, James Donald, Woodall Spa, Lincoln LN10 6YN (GB); Hillcoat, Mark James, Sleaford, Lincolnshire NG34 9GZ (GB); Hillcoat, Clive John, Ashby de la Launde, Lincolnshire LN4 3JG (GB)
(74) Representative: Hitchcock, Esmond Antony

(57) **Abstract**

Soluble sulphates in substratum materials are stabilised by treatment with at least one metal salt and a silicate solution, to convert at least some of the sulphates from a soluble to a less soluble form. The treatment is applied beneath concrete floors to prevent degeneration of the concrete as a consequence of migration of the soluble sulphates from the substratum to the concrete. The invention can be applied not only to substratum beneath the concrete floor, but also to exposed areas of substratum. Additionally, the treatment can be applied directly to the major constituents of concrete prior to mixing.

## Description

This invention relates to the treatment of substratum materials to stabilise soluble sulphates therein. It relates particularly to the application of such treatment to material beneath floors and especially concrete floors. Typical materials suitable for treatment according to this invention are industrial rubble such as rubble and hardcore, but they also include soil or materials which have been in contact with or derived from industrial byproducts. The invention is also applicable to the treatment of concrete itself, other cementitious materials, and clay based materials such as bricks.

The stabilisation of sulphate bearing soils using a silica compound is known in the art. Reference is directed in this respect to Internationl Patent Specification No. WO93/11203. Soil stabilising techniques are also described in International Patent Specification No. WO97/20012 and in United States Patent No. 5,122,012.

Concrete is particularly susceptible to attack by water soluble sulphates which may be present in soil or various substratum materials. Colliery shale has proved especially problematical in this respect, but other materials containing sulphate have provoked similar difficulties. Such materials include demolition rubble, clinker ash, blastfurnace slag and other industrial wastes used in construction.

The presence of moisture provides a solvent for sulphates, and the resulting solutions can attack cured and hardened cement in concrete and other cementitious materials. Concrete ground floor slabs, foundations and bases are particularly at risk, as in moist conditions where no barrier exists, water soluble sulphates are able to migrate into the concrete where they are free to react with the hydration products of Portland Cement. Such reactions are generally described as "sulphate attack" and are usually characterised by a gradual degeneration of the concrete caused by expansion, heaving and cracking resulting from the attack.

The mechanisms involved in sulphate attack have been well documented by numerous technical papers and reference works published to date and require no elaboration here. The most aggressive sulphates include those of magnesium, sodium and ammonium. Other sulphates may cause attack (calcium, copper, aluminium and potassium for example), but usually to a lesser extent.

The rate and extent of sulphate attack is dependant upon the following:
i. The exposure conditions - the concentration and type of sulphate;
ii. The amount of water available - the nature of the water table and the mobility of ground-water;
iii. The susceptibility of the concrete - cement type and content, type of aggregate, water: cement ratio and curing regime;
iv. The rate of transport of the sulphate - permeability of the concrete;
v. The form of construction.

The "symptoms" of sulphate attack are rarely apparent less than five years after construction and periods of twelve to eighteen years are not uncommon.

Another form of sulphate attack is deleterious reaction arising from and known as "Delayed Ettringite Formation". Ettringite is the name given to the chemical complex calcium sulphoaluminate hydrate which is a common reaction product of sulphate attack. In instances where elevated temperature curing has been employed (usually above 75°C) ettringite formed initially during pre-cure may be decomposed by the raised temperature. Under certain conditions a slow crystallization of ettringite may follow due to gradual release of aluminate combining with free sulphate ions in the pore water. Although a full understanding of mechanisms has not been concluded at this time, delayed ettringite formation is sufficiently well documented to pre-empt a detailed explanation here. Suffice to say that the ettringite formation can induce stresses of sufficient magnitude to disrupt concrete and cementitious materials.

We have found that by treating substratum material containing water soluble sulphates with a combination of at least one metal salt (normally in solution) and a silicate solution, such sulphates can be converted from their soluble form to a relatively insoluble and stable form which as a consequence effectively minimises the threat to the integrity of concrete or cementitious material. The preferred metal salts are those of calcium, typically calcium oxide, but a number of such salts can act as an effective reactive partner for the silicate solution. The silicate solution can be modified to enhance its penetration into the substrate, for example by the addition of an alcohol. Preferred silicates are potassium and sodium silicates.

The treatment materials in methods of the invention can be supplemented by a grout, primarily for filling voids in the substratum materials, but also to ensure that the treatment materials provide proper protection for the overlaying concrete floor. The grout can be adapted to inhibit the action of sulphates in the substratum materials, and will typically include an amorphous silicic acid precipitate.

Treatments according to the invention can be accomplished in a number of ways. Preferred treatments comprise spraying over an exposed area of substratum or injecting into the substratum in a confined space. In some circumstances, where the contaminated substrate is in a confined space, it is preferred to excavate the body or bodies defining the boundaries of the space to expose the substratum prior to treatment by spraying. Where the treatment is by injection, holes can be drilled in such body or bodies through which the solutions are then injected. These latter treatments are particularly useful where the contaminated substratum is beneath a concrete floor laid or suspended substantially directly thereover.

The invention is also applicable to treatment of concrete itself. Thus, the major constituents such as aggregate, sand etc., can be treated with the combinations described above of at least one solution of a metal salt and a silicate solution, prior to mixing with cement and water. Additionally, treatments of the invention can be applied to an exposed substratum. In this variant particularly, the treatment material should include grout, preferably adapted in the manner described above to inhibit the sulphate action.

Injection treatments according to the invention are particularly suitable for application to substratum beneath an existing concrete floor. Holes are drilled through the floor at an appropriate spacing, depending upon the nature of the substratum and the area to be treated. Typical spacings are 300 to 1000 mm. The treatment materials are then injected through the drilled holes at an appropriate pressure, typically in the range 1 to 30 bar. The preferred metal salt solution, typically of calcium or barium, is first delivered to saturate the sub floor contents, with the silicate solution delivered thereafter. A preferred silicate solution is a modified alkali silicate having an Me₂O:SiO₂ weight ratio of 1:2 to 1:3. If voids are found to occur in the sub floor area, then they can be filled with grout by means of a deep injection process, and the grout can include plasticiser if required. A typical water:cement ratio for the grout would be 0.6:1. A suitable cementitious grout contains 2 to 6% by weight of the dry weight of cement, of a finely composed amorphous silicic acid, with at least 90% by weight SiO₂ more finely composed precipitated active silicate of magnesium, calcium or aluminium. These silicic acids have a BET surface of 50 - 200 m²/g, and a d₅₀% value in accordance with a grain analysis of Cilas of below 20 µm.

In the general formula MeO for the oxide part of the modified alkali silicate Me means lithium sodium or potassium. The latter is preferred in the mixture with sodium. A percent by volume of the alkali silicate is usually diluted with 0.5 to 2% of water. That corresponds to SiO₂ concentrations of 7 to 20% by weight. A typical modified alkali silicate has the following composition in 10 kg of solution.

| | | |
|---|---|---|
| Silicic acid | calculated as SiO₂ | 30 - 32 moles |
| Alkali metal ions | calculated as Na⁺¹ | 23 - 24.3 moles |
| C₁ - C₃ -alcohol | calculated as ethanol | 2 - 2.1 moles |
| Carbonate | calculated as CO3⁻² | 1.6 - 2.1 moles |
| Water | calculated as at least | 400 moles |

The alkali metal ions are preferred as sodium or potassium ions, the solution has a viscosity of 10 - 12 mPa.sec. Ethanol is the preferred alcohol.

A purpose of the deep injection of silicic acid modified grout into voids in the sub floor stratum is to displace the modified silicate solution upwards to saturate the underside of the floor slab while maintaining the cohesive quality of the grout or cement glue (see below) thereby coating the concrete underface with silicic acid modified grout and impregnating the slab with modified silicates, which will reduce the water absorption to nil. Thus preventing the transport of remaining free sulphate salts into the concrete slab.

In an experimental test, the following three solutions were prepared:
i) Sulphate solution
   prepared by dissolving 10g of sodium sulphate (Na₂SO₄) in 1000ml of distilled water, thus producing 6.76g of sulphate (as SO₄) per litre of solution.
ii) Calcium Nitrate Solution*
   Prepared by dissolving 25g of calcium nitrate (Ca(NO₃)₂) in 1000 ml of distilled water.
iii) A volume of supplied ISO-110 K was diluted with distilled water to produce a 1 : 3 (ISO : Distilled water) solution.

* It should be noted that calcium nitrate was used in the laboratory test as an inexpensive readily soluble calcium salt as a source of calcium ions other than calcium oxide, thus providing further verification of the basic principle of the treatment. In a practical situation the use of calcium nitrate would be restricted by Health & Safety and Environmental considerations.
950 ml of the calcium nitrate solution and 50 ml of the dilute ISO-100 K solution were sequentially added to 1000 ml of the sulphate solution. The resulting precipitate was filtered off and the filtrate analysed for sulphate content in accordance with BS 1377 Part 3: 1990: Clause 5. As a result, we found that the sulphate concentration was reduced from its initial value of 6.76 g per litre to 2.06g per litre; a reduction in water soluble sulphate concentration of 69.5%. Further additions of 1S0-110 K continued to yield precipitates suggesting that in the presence of sufficient calcium ions it may be possible to achieve almost complete conversion of soluble sulphates to a relatively insoluble form.

### Grouts and Cement Glues

Water absorption according to DIN 52 103 1A was examined in % by volume of the following mortar mixes.
A. Mortar mixture tested without the addition of 3% finely composed amorphous silicic acid.
B. Mortar pieces tested with 3% finely composed amorphous silicic acid.
C. Mortar mixture B saturated with modified alkali silicate solution.

| Test pieces | | Water Absorption % by Vol DIN 52 103 1A |
|---|---|---|
| A | Without silicic acid | 6.7 |
| B | With silicic acid | 0.11 |
| C | With 3% silicic acid with modified saturated alkali silicate | 0.00 |

It is important to maintain the integrity of the grout or cement glue by reducing bleed or the loss of water. Tests have shown that the addition of a proportion (typically 3%) of the dry cement weight of finely composed amorphous acid into the mix can dramatically reduce the amount of water loss.

| Water:Cement Ratio | Decrease in Volume of Precipitated Water after 7 hours, using a silicic acid precipitate inclusion |
|---|---|
| 0.40 | 68% |
| 0.50 | 80% |
| 0.70 | <80% |

## Claims

1. A method of stabilising soluble sulphates in substratum materials beneath a concrete floor, comprising treating the substratum with at least one metal salt and an alkali silicate solution to convert at least some of the sulphates from a soluble to a less soluble form.

2. A method according to Claim 1 including the step of filling voids in the area beneath the floor with a grout.

3. A method according to Claim 2 wherein the grout includes an amorphous silicic acid precipitate.

4. A method according to any preceding Claim wherein the treatment is-accomplished by injection into the substrate in a confined space.

5. A method according to Claim 4 wherein holes are drilled into the body or bodies defining the boundaries of the space, through which the treatment materials are injected.

6. A method according to any of Claims 1 to 3 accomplished by spraying the treatment materials over an area of the substratum exposed by the at least partial removal of a body or bodies of material overlaying the substratum.

7. A method according to Claim 6 wherein the concrete floor is distorted as a consequence of attack by said soluble sulphates.

8. A method of stabilising soluble sulphate in substratum materials, comprising treating the substratum with at least one metal salt, an alkali silicate solution and a finely composed amorphous silicic acid.

9. A method of stabilising the major constituents of concrete comprising treating the constituents, prior to mixing with cement and water, with at least one metal salt and a modified alkali solution.

10. A method according to Claim 9 including the addition of finely composed amorphous silicic acid to said major constituents.

11. A method according to any preceding Claim wherein the at least one metal salt is provided in solution.

12. A method according to Claim 11 wherein the at least one metal salt solution is a calcium solution.

13. A method according to Claim 11 or Claim 12 wherein in said at least one solution, the metal of the metal salt or salts is an alkaline earth metal.

14. A method according to any of Claims 1 to 11 wherein said at least one solution comprises a calcium solution and at least one solution of the salt of an alkaline earth metal.

15. A method according to any preceding Claim wherein said at least one solution comprises a calcium solution and at least one solution of the salt of an alkaline earth metal.

16. A method according to any preceding Claim wherein the silicate solution is a modified alkali silicate having a Me₂O:SiO₂ weight ratio of 1:2 to 1:3.

17. A method according to Claim 9 and Claim 16 wherein the amorphous silicic acid has a BET surface of 50 - 200 m²/g and a d₅₀% value below 20 µm.

18. A method according to any of Claims 1 to 15 wherein the silicate solution is ISO-110 K.
